# EUROPÄISCHE PATENTSCHRIFT

(11) **EP 1 027 232 B1**
(45) Veröffentlichungstag und Bekanntmachung des Hinweises auf die Patenterteilung: **20.11.2002**
(21) Anmeldenummer: 99953678.2
(22) Anmeldetag: 01.09.1999
(51) Int. Cl.: B60R 21/00

(54) **STEUERVORRICHTUNG FÜR EINE BETRIEBSFUNKTION EINES FAHRZEUGS**
CONTROL DEVICE FOR AN OPERATING FUNCTION OF A VEHICLE
DISPOSITIF DE COMMANDE POUR UNE FONCTION DE SERVICE D'UN VEHICULE

(30) Priorität: 09.09.1998 DE 19841261
(43) Veröffentlichungstag der Anmeldung: 16.08.2000
(73) Patentinhaber: SIEMENS AKTIENGESELLSCHAFT, 80333 München (DE)
(72) Erfinder: SWART, Marten, D-93083 Obertraubling (DE); ZELGER, Christian, D-93049 Regensburg (DE); ACHHAMMER, Günter, D-93128 Regenstauf (DE)
(86) Internationale Anmeldenummer: DE9902765
(87) Internationale Veröffentlichungsnummer: WO00013942

(56) Entgegenhaltungen:
- WO-A-88/00896
- DE-A- 4 409 019
- DE-A- 19 514 732
- DE-C- 3 729 785
- US-A- 5 506 775

## Beschreibung

Die Erfindung betrifft eine Steuervorrichtung für eine Betriebsfunktion eines Fahrzeugs gemäß Oberbegriff von Patentanspruch 1.

Eine derartige Steuervorrichtung ist aus WO 8800896 bekannt, und weist eine Steuereinheit für die Betriebsfunktion auf. Diese Steuereinheit enthält gewöhnlich eine Recheneinheit in Form eines Mikroprozessors zum Verarbeiten von gemessenen oder berechneten Größen und zum Erstellen einer Steuerfunktion in Abhängigkeit der gemessenen oder berechneten Größen. Eine gemessene Größe wird dabei meist von zumindest einem bei der Steuereinheit angeordneten Sensor geliefert. Eine Steuerfunktion kann die Steuerung eines Insassenschutzmittels wie Airbag,, Gurtstraffer, Überrollbügel oder ähnliches umfassen, oder aber auch die Steuerung der Benzinzufuhr zum Motor, die Steuerung von Komfortfunktionen des Fahrzeugs wie Zentralverriegelung, Fensterheber, Gurtöffner, etc.. Diesen Betriebsfunktionen ist gemein, daß sie vorzugsweise während und auch nach einem Aufprall des Fahrzeugs oder einer sonstigen kritischen Fahrsituation ausführbar sein müssen.

Die Steuereinheit für eine solche Betriebsfunktion wird gewöhnlich aus der Fahrzeugbatterie mit Energie versorgt. Die erforderliche Betriebsspannung wird über eigene Zuleitungen oder über das Bordnetz der Steuereinheit zugeführt mittels eines Spannungsreglers aus der Batteriespannung gewonnen. Diese Art der Energiezufuhr kann jedoch bei einem invasiven Aufprall zumindest kurzzeitig oder dauerhaft unterbrochen werden, gerade wenn die eindringende Struktur die Zuleitungen der Energieversorgung durchtrennt, kurzschließt oder anderweitig beschädigt. Bei einem solchen Szenario muß die Betriebsfunktion dennoch weiterhin ausführbar sein: So kann es für den Insassenschutz durchaus erforderlich sein, beipielsweise das Aufblasen eines Airbags als Betriebsfunktion auch nach dem Zusammenbruch der Energieversorgung einzuleiten. Zu diesem Zweck weist die bekannte Steuereinheit regelmäßig eine Reserveenergiequelle - im folgenden erstes Energiespeicherelement genannt - vorzugsweise in Form eines Energiespeicherkondensators auf, der zumindet für eine Zeitspanne von einigen wenigen Millisekunden nach der Energieversorgungsunterbrechung - diese Zeit wird aufgrund der autarken Energiemittelbereitstellung in der Steuereinheit im folgenden Autarkiezeit genannt - ausreichend Energie zum Betreiben der Steuereinheit und gegebenenfalls zum Zünden des zugeordneten Insassenschutzmittels oder des Ausführens einer anderen zugeordneten Betriebsfunktion bereitstellt.

Bei einer weiteren bekannten Steuervorrichtung ist eine Sensoreinheit räumlich entfernt von der Steuereinheit angeordnet. Eine solche Sensoreinheit ist dann gewöhnlich über eine Leitung, insbesondere eine Zweidrahtleitung mit der Steuereinheit verbunden. Die Sensoreinheit liefert über diese Leitung ihre Daten an die Steuereinheit. Die Ursache für eine solche ausgelagerte Anordnung der Sensoreinheit kann beispielsweise in einer nur an bestimmten Positionen des Fahrzeugs gegebenen, ausreichenden Signalempfindlichkeit der Sensorik liegen. Dies gilt insbesondere für Sensoreinheiten zum Erkennen eines Seitenaufpralls, die aufgrund der äußerst zeitkritischen Anforderungen an die Auslösezeit zum Zünden eines Seitenairbags möglichst nahe an einem potentiellen Aufprallort - insbesondere den Flanken des Fahrzeugs - angeordnet sein sollten. Eine andere Ursache für die Auslagerung einer Sensoreinheit kann der Wunsch sein, einerseits eine bestehende und bereits in Serie gefertigte Steuereinheit weiterverwenden und in ihrer Konstruktion/Bauform oder ihrem Layout - insbesondere dem Schaltungsträgerlayout - nicht mehr ändern zu wollen, andererseits jedoch optional Zusatzfunktionen auf Basis einer weiteren Sensorik bereitstellen zu wollen. Eine solche Zusatzfunktion kann beispielsweise in dem Hinzufügen einer Überrollerkennung zu einer Insassenschutzmittelsteuereinheit bestehen. So kann dann optional eine entfernt angeordnete Sensoreinheit zur Überrollerkennung an die Steuereinheit angeschlossen werden. Bei entsprechender Softwareergänzung in der Steuereinheit können im folgenden ein oder mehrere ausgewählte Insassenschutzmittel bei einem erkannten Fahrzeugüberschlag ausgelöst werden.

Aufgabe der Erfindung ist es deshalb, eine Steuervorrichtung zu schaffen, die eine entfernt angeordnete Sensoreinheit enthält und dabei sowohl den Betrieb der Steuereinheit als auch die Sensoreinheit für eine Mindestzeit nach einem Ausfall oder einer Unterbrechung der Energieversorgung gewährleistet kann.

Die Aufgabe wird gelöst durch die Merkmale des Patentanspruchs 1. Dabei enthält die entfernt angeordnete Sensoreinheit ein eigenes Energiereservoir, im folgenden zweites Energiespeicherelement genannt, das derart mit dem ersten Energiespeicherelement gekoppelt ist, daß zumindest bei ausgefallener oder unterbrochener Energieversorgung das erste und das zweite Energiespeicherelement gemeinsam Energie für den Betrieb sowohl der Steuereinheit als auch der Sensoreinheit bereitstellen.

Wesentlich für Erfindung ist also, daß die entfernt voneinander angeordneten Energiespeicherelemente vorzugsweise schaltungstechnisch derart verbunden sind, daß nicht ein jedes Energiespeicherelement nur die ihm zugeordnete Einheit - entweder Steuereinheit oder Sensoreinheit - mit der in ihm gespeicherten Energie bedient, sondern daß die beiden Energiespeicherelemente beipielsweise durch Parallel- oder Serienschaltung über die die Steuereinheit mit der Sensoreinheit verbindene Leitung hinweg schaltungstechnisch derart angeordnet sind, daß sie einen gemeinsamen Energiespeicher bilden, aus dem sich bei einem Energieversorgungsverlust sowohl die Steuereinheit als auch die Sensoreinheit gleichermaßen bedienen.

Als besonders vorteilhaft stellt sich die erfindungsgemäße Anordnung heraus, wenn die Steuervorrichtung mit einer Steuereinheit und dem ersten Energiespeicherelement um eine entfernt angeordnete Sensoreinheit erweitert werden soll, die aufgrund ihrer Funktion eine längere Autarkiezeit für die Sensoreinheit selbst und damit für die gesamte Steuervorrichtung bestehend aus Steuereinheit und Sensoreinheit erfordert als die Autarkiezeit für eine Steuervorrichtung bestehend alleine aus der Steuereinheit. Das erste Energiespeicherelement der Steuereinheit ist dabei derart bemessen, daß es der kurzen Autarkiezeit für den Stand-Alone-Betrieb der Steuereinheit ohne eine angeschlossene, ausgelagerte Sensoreinheit Genüge leistet. Hierbei ist vorzugsweise die Steuereinheit als Insassenschutzmittelsteuereinheit ausgebildet, die z.B. zumindest einen Beschleunigungssensor aufweist und eine relativ kurze Autarkiezeit erfordert. Dementsprechend ist bei der Steuereinheit ein Energiespeicherelement mit kleinem Energiereservoir angeordnet, was auch hinsichtlich des Bauraumes vorteilhaft ist. Eine in Form eines Überrollsensors hinzugefügte Überrollerkennungsfunktion erfordert nun für die ausgelagerte Sensoreinheit mit dem Überrollsensor und damit auch für die die Sensordaten verarbeitende Steuereinheit eine wesentlich längere Autarkiezeit als für eine Steuervorrichtung ohne Überrollerkennungsfunktion. Diese längere Autarkiezeit beruht auf der Tatsache, daß ein Überrollen des Fahrzeugs innerhalb einer wesentlich längeren Zeitspanne erfolgt als ein Frontal - oder Seitencrash. Während dieser gesamten Überrollzeitspanne muß bewertet werden, ob ein Insassenschutzmittel wie ein Überrollbügel oder ein Airbag (für Seite, Front oder Kopf) ausgelöst werden soll. Sind nun beispielsweise in einer vorteilhaften Weiterbildung der Erfindung das erste und das zweite Energiespiecherelement als Energiespeicherkondensatoren ausgebildet und vorzugsweise parallel zueinander angeordnet, so ergibt sich für die gesamte Steuervorrichtung - also für Steuereinheit und Sensoreinheit - ein gemeinsamer Energievorrat, der durch die Parallelschaltung der Kapazitäten in der Steuereinheit und in der Sensoreinheit bestimmt ist sowie durch die in etwa gleiche Spannung an diesen Kapazitäten. Bei bekannter Spannung und bekannter Kapazität in der Steuereinheit kann damit für eine vorgegebene Autarkiezeit für die gesamte Steuervorrichtung die Kapazität des Kondensators in der Sensoreinheit nach den gängigen Formeln für den Zusammenhang zwischen Kapazität und Spannung am Kondenstor sowie für die Parallelschaltung für Kondensatoren berechnet werden.

Vorteilhafte Weiterbildungen der Erfindung sind durch die Unteransprüche gekennzeichnet.

Die Erfindung und ihre Weiterbildungen wird anhand von Ausführungsbeispielen in der Zeichnung näher erläutert. Es zeigen:
- Figur: 1 ein prinzipielles Blockschaltbild einer Steuervorrichtung, und

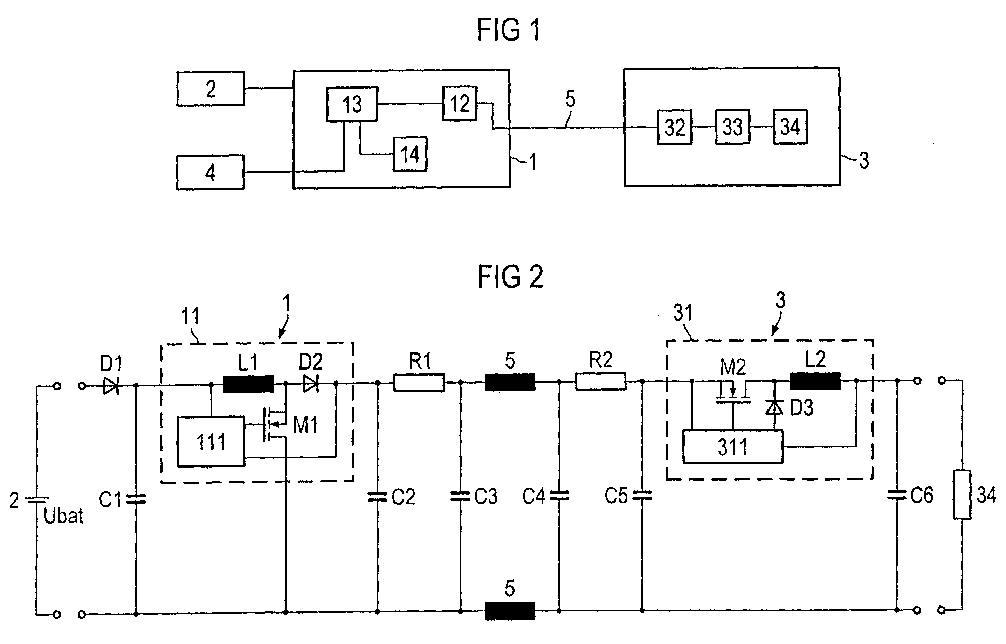

- Figur 2: einen Schaltplan der erfindungsgemäßen Steuervorrichtung.

Figur 1 zeigt ein Blockschaltbild einer Steuervorrichtung mit einer Steuereinheit 1, an die über eine Leitung 5 eine entfernt von der Steuereinheit 1 angeordnete Sensoreinheit 3 angeschlossen ist. Die Steuereinheit 1 ist mit einer Energieversorgung 2 und einem Insassenschutzmittel 4 verbunden. Steuereinheit 1 und Sensoreinheit 3 enthalten jeweils eine Schnittstelle 12 bzw. 32 für den Datenübermittlungsbetrieb auf der Leitung 5 sowie einen Prozessor 13 bzw. 33. Die Steuereinheit 1 enthält darüberhinaus einen linearen Beschleunigungssensor 14, die Sensoreinheit 3 einen Überrollsensor 34.

Im folgenden wird der Betrieb der Steuervorrichtung nach Figur 1 erläutert: Die Energieversorgung 2 speist die Steuereinheit 1 mit Energie zu ihrem Betrieb. Signale des Beschleunigungssensors 14 werden im Prozessor 13 der Steuereinheit 1 insbesondere algorithmisch ausgewertet. Wird von dem Prozessor 13 anhand des Signalverlaufs erkannt, daß ein ausreichend schwerer Aufprall vorliegt, wird durch den Prozessor 13 das Insassenschutzmittel 4 ausgelöst.

Zusätzlich kann das Insassenschutzmittel 4 auch dann ausgelöst werden, wenn von der Sensoreinheit 3 ein Überschlag erkannt wird. Dazu liefert der Überschlagsensor 34 Drehbewegungssignale an den Prozessor 33 der Sensoreinheit 3, der diese Drehbewegungssignale auswertet. Mittels der Schnitstelle 32, der Leitung 5 und der Schnittstelle 12 werden relevante Daten der Sensoreinheit 3 an den Prozessor 13 der Steuereinheit 1 übermittelt. Wird eine ausreichende Überrollbewegung erkannt, so wird das Insassenschutzmittel 4 durch den Prozessor 13 ausgelöst.

Die Energieversorgung der ausgelagerten Sensoreinheit 3 wird durch die Steuereinheit 1 übernommen. Dazu prägt die Steuereinheit 1 eine Gleichspannung auf die Leitung 5 auf, die als Versorungsspannung für die Sensoreinheit 3 dient. Die Leitung 5 ist zur Energieübermittlung zumindest als Zweidrahtleitung ausgebildet. Zur Signalübertragung kann ein weiterer Draht vorgesehen sein. Dies gilt auch für das Ausführungsbeispiel nach Figur 2.

Figur 2 zeigt ein Schaltbild der erfindungsgemäßen Steuervorrichtung. Dabei wird in der Steuereinheit 1 eine Batteriespannung der Fahrzeugbatterie Ubat über eine Verpolschutzdiode D1 und einen Entstörkondensator C1 einem an sich bekannten Spannungswandler 11 mit einem Step-Up-Regler 111, einer Spule L1, einem FET M1 und einer Diode D2 zugeführt. Die Spannung am Ausgang des Spannungswandlers 11 dient als Versorgungsspannung des nicht eingezeichneten Prozessors der Steuereinheit 2 und des nicht eingezeichneten Beschleunigungssensors. Ferner wird das erste Energiespeicherelement C2 auf diese Spannung aufgeladen. Über einen Schutzwiderstand R1 und einen Entstörkondensator C3 wird diese Spannung auf die Leitung 5 gelegt, um die Sensoreinheit 3 mit Energie zu versorgen.

Über einen Entstörkondensator C4 und einen Schutzwiderstand R2 wird sensoreinheitsseitig das zweite Energiespeicherelement C5 aufgeladen und die Spannung einem an sich bekannten Spannungswandler 31 mit einem Step-Down-Regler 311, einer Spule L2, einem FET M2 und einer Diode D3 zugeführt. Die Spannung am Ausgang des Spannungswandlers 31 dient als Versorgungsspannung des nicht eingezeichneten Prozessors der Sensoreinheit 3 und des Überrollsensors 34. Der Kondensator C6 dient wiederum der Entstörung.

Die Entstörkondensatoren C1, C3, C4 und C6 dienen der elektromagnetischen Enstörung. Die Schutzwiderstände R1 und R2 dienen dem Schutz der Steuereinheit 1 oder der Sensoreinheit 3 im Falle eines Kurzschlusses an der Sensoreinheit 3 bzw. der Steuereinheit 1. Die Spannungswandler 11 und 31 setzen die zugeführte Spannung hoch oder herunter, je nachdem, welche Versorgungsspannung die Steuereinheit 1 bzw. die Sensoreinheit 3 benötigen.

Fällt die Energieversorgung 2 aus, versorgen sich die Steuereinheit 1 und die Sensoreinheit 3 aus der Parallelschaltung der als Kondensatoren ausgebildeten Energiespeicherelemente C2 und C5. Die Verluste an den Schutzwiderständen R1 und R2 sind sehr gering, sodaß diese bei der Kapazitätsberechnung und bei der Energieabgabe aus den Energiespeicherelementen C2 und C5 vernachlässigt werden können.

## Patentansprüche

1. Steuervorrichtung für eine Betriebsfunktion eines Fahrzeugs,
- mit einer Steuereinheit (1) für die Betriebsfunktion,
- mit einer Energieversorgung (2) für die Steuereinheit (1), und
- mit einer mit der Steuereinheit (1) zusammenwirkenden Sensoreinheit (3) zum Bereitstellen von Daten für die Steuereinheit (1),
- bei der die Steuereinheit (1) ein erstes Energiespeicherelement (C2) zum Bereitstellen von Energie bei ausgefallener oder unterbrochener Energieversorgung (2) enthält,
**dadurch gekennzeichnet,**
- **daß** die Sensoreinheit (3) entfernt von der Steuereinheit (1) angeordnet ist, und
- **daß** die Sensoreinheit (3) ein zweites Energiespeicherelement (C5) enthält, das derart mit dem ersten Energiespeicherelement (C2) gekoppelt ist, daß zumindest bei ausgefallener oder unterbrochener Energieversorgung (2) das erste und das zweite Energiespeicherelement (C2,C5) gemeinsam Energie für den Betrieb sowohl der Steuereinheit (1) als auch der Sensoreinheit (3) bereitstellen.

2. Steuervorrichtung nach Anspruch 1, **dadurch gekennzeichnet, daß** das erste und das zweite Energiespeicherelement (C2,C5) jeweils als Energiespeicherkondenstor ausgebildet sind.

3. Steuervorrichtung nach Anspruch 2, **dadurch gekennzeichnet, daß** das erste und das zweite Energiespeicherelement(C2,C5) parallel zueinander angeordnet sind.

4. Steuervorrichtung nach einem der vorhergehenden Ansprüche, **dadurch gekennzeichnet, daß** die Fahrzeugbatterie (Ubat) als Energieversorgung (2) dient.

5. Steuervorrichtung nach einem der vorhergehenden Ansprüche, **dadurch gekennzeichnet, daß** die Sensoreinheit (3) bei funktionstüchtiger Energieversorgung (2) von der Steuereinheit (1) mit Energie versorgt wird.

6. Steuervorrichtung nach Anspruch 5, **dadurch gekennzeichnet, daß** die Steuereinheit (1) und/oder die Sensoreinheit (3) einen Spannungswandler (11,31) zum Anpassen der von der Energieversorgung (2) gelieferten Spannung enthält.

7. Steuervorrichtung nach einem der vorhergehenden Ansprüche, **dadurch gekennzeichnet, daß** die Steuereinheit (1) zum Steuern eines Insassenschutzmittels (4) vorgesehen ist.

8. Steuervorrichtung nach Anspruch 7, **dadurch gekennzeichnet, daß** die Sensoreinheit (3) zum Erkennen einer Drehbewegung des Fahrzeugs ausgebildet ist.

9. Steuervorrichtung nach Anspruch 7, **daduch gekennzeichnet,** daß die Sensoreinheit (3) einen Aufprallsensor enthält.

10. Steuervorrichtung nach Anspruch 8, **dadurch gekennzeichnet, daß** die Sensoreinheit einen Sensor (34) zum Erkennen eines Fahrzeugüberschlages enthält.

## Claims

1. Control device for an operating function in a vehicle,
- with a control unit (1) for the operating function,
- with an energy supply (2) for the control unit (1) and
- with a sensor unit (3) interacting with the control unit (1) to supply data for the control unit (1),
- in which the control unit (1) contains a first energy storage element (C2) to supply energy in the event of failure or interruption of the energy supply (2),
**characterised in that**
- the sensor unit (3) is located away from the control unit (1) and
- the sensor unit (3) contains a second energy storage unit (C5), which is linked to the first energy storage unit (C2) such that the first and second energy storage elements (C2, C5) together supply energy for the operation of both the control unit (1) and the sensor unit (3) at least in the event of failure or interruption of the energy supply (2).

2. Control device according to Claim 1, **characterised in that** the first and second energy storage elements (C2, C5) are each in the form of an energy storage capacitor.

3. Control device according to Claim 2, **characterised in that** the first and second energy storage elements (C2, C5) are arranged parallel to each other.

4. Control device according to one of the preceding claims, **characterised in that** the vehicle battery (Ubat) serves as the energy supply (2).

5. Control device according to one of the preceding claims, **characterised in that** the sensor unit (3) is supplied with energy by the control unit (1) when the energy supply (2) is operational.

6. Control device according to Claim 5, **characterised in that** the control unit (1) and/or the sensor unit (3) contains a voltage transformer (11, 31) to convert the voltage supplied by the energy supply (2).

7. Control device according to one of the preceding claims, **characterised in that** the control unit (1) is intended to control an occupant protection device (4).

8. Control device according to Claim 7, **characterised in that** the sensor unit (3) is configured to identify a turning movement of the vehicle.

9. Control device according to Claim 7, **characterised in that** the sensor unit (3) contains an impact sensor.

10. Control device according to Claim 8, **characterised in that** the sensor unit contains a sensor (34) to identify vehicle roll-over.

## Revendications

1. Dispositif de commande pour une fonction d'exploitation d'un véhicule, comportant :
- une unité de commande (1) pour la fonction d'exploitation,
- une source d'alimentation en énergie (2) pour l'unité de commande (1), et
- une unité de détecteur (3) coopérant avec l'unité de commande (1) pour la mise à disposition de données pour l'unité de commande (1),
- dans lequel l'unité de commande (1) comporte un premier élément de stockage d'énergie (C2) pour la mise à disposition d'énergie en cas de défaillance ou d'interruption de la source d'alimentation en énergie (2),
**caractérisé en ce que**
- l'unité de détecteur (3) est placée à distance de l'unité de commande (1), et
- l'unité de détecteur (3) comporte un second élément de stockage d'énergie (C5), qui est accouplé au premier élément de stockage d'énergie (C2) de telle manière que, au moins en cas de défaillance ou d'interruption de la source d'alimentation en énergie (2), le premier et le second élément de stockage d'énergie (C2, C5) mettent à disposition en commun de l'énergie pour le fonctionnement de l'unité de commande (1) ainsi que de l'unité de détecteur (3).

2. Dispositif de commande selon la revendication 1, **caractérisé en ce que** le premier et le second élément de stockage d'énergie (C2, C5) ont respectivement la forme de condensateur de stockage d'énergie.

3. Dispositif de commande selon la revendication 2, **caractérisé en ce que** le premier et le second élément de stockage d'énergie (C2, C5) sont disposés en parallèle l'un avec l'autre.

4. Dispositif de commande selon l'une des revendications précédentes, **caractérisé en ce que** la batterie du véhicule (Ubat) sert de source d'alimentation en énergie (2).

5. Dispositif de commande selon l'une des revendications précédentes, **caractérisé en ce que** l'unité de détecteur (3) est alimentée en énergie, si la source d'alimentation en énergie (2) est capable de fonctionner, par l'unité de commande (1).

6. Dispositif de commande selon la revendication 5, **caractérisé en ce que** l'unité de commande (1) et/ou l'unité de détecteur (3) comportent un transformateur de tension (11, 31) pour adapter la tension fournie par la source d'alimentation en énergie (2).

7. Dispositif de commande selon l'une des revendications précédentes, **caractérisé en ce que** l'unité de commande (1) est prévue pour la commande d'un moyen de protection des occupants (4).

8. Dispositif de commande selon la revendication 7, **caractérisé en ce que** l'unité de détecteur (3) est conçue pour la reconnaissance d'un mouvement de rotation du véhicule.

9. Dispositif de commande selon la revendication 7, **caractérisé en ce que** l'unité de détecteur (3) comporte un détecteur de choc.

10. Dispositif de commande selon la revendication 8, **caractérisé en ce que** l'unité de détecteur comporte un détecteur (34) de reconnaissance de retournement du véhicule.
